Europäisches Patentamt

European Patent Office

Office européen des brevets

(19)

(11) Veröffentlichungsnummer: **0 199 914**
B1

(12) **EUROPÄISCHE PATENTSCHRIFT**

(45) Veröffentlichungstag der Patentschrift:
30.08.89

(51) Int. Cl.⁴: **B 64 C 1/00**, B 64 C 3/18

(21) Anmeldenummer: 86102053.5

(22) Anmeldetag: 18.02.86

(54) Unterstruktur für Trag- und Leitwerke von Flugzeugen.

(30) Priorität: 27.04.85 DE 3515323

(43) Veröffentlichungstag der Anmeldung:
05.11.86 Patentblatt 86/45

(45) Bekanntmachung des Hinweises auf die Patenterteilung: 30.08.89 Patentblatt 89/35

(84) Benannte Vertragsstaaten:
DE FR GB IT

(56) Entgegenhaltungen:
US–A– 1 880 480
US–A– 3 158 527
ASTRONAUTICS AND AERONAUTICS, Band 18, Nr. 10, Oktober 1980, Seiten 60-63, Vought Corp., New York, US; J.A. FOUSE et al.: "Expanded-tube technology"

(73) Patentinhaber: DORNIER GMBH
Postfach 1420
D-7990 Friedrichshafen 1 (DE)

(72) Erfinder: Johst, Eberhard, Dipl.-Ing.
Schulstrasse 37a
D-7997 Immenstaad (DE)
Erfinder: Sahm, Karl-Friedrich, Dr.rer.nat.
Friedrichshafener Strasse 6a
D-7997 Immenstaad (DE)

(74) Vertreter: Landsmann, Ralf, Dipl.-Ing.
DORNIER GMBH - Patentabteilung - Kleeweg 3
D-7990 Friedrichshafen 1 (DE)

EP 0 199 914 B1

**Beschreibung**

Die Erfindung betrifft ein tragendes Bauteil für Trag- und Leitwerke von Flugzeugen nach dem Oberbegriff des Anspruchs 1. Ein derartiges Bauteil ist z. B. durch die US-A-3 158 527 bekannt.

Aus der Praxis sind konventionelle Konstruktionen und Lösungen hinreichend bekannt, bei welchen zum Bau von dünnen Überschall- Trag- und Leitwerken sowohl Vielholm- als auch Sandwichbauweisen mit und ohne CFK-Werkstoffen verwendet werden.

Zum Beispiel verwendet der US-Flugzeugbau beim Flugzeug AV-8B einen CFK-Flügel mit zahlreichen CFK-Einzelholmen, deren Stege gewellt sind. Auch das Leitwerk des Rockwell-Flugzeugs B-1 ist mit derartigen gewellten Holmen versehen, wobei ursprünglich die aus Aluminium bestehenden Stege und Flansche miteinander verschweisst und später aber auch aus einem CFK-Werkstoff gefertigt wurden. Beim Jäger F-16 wurde das Höhenleitwerk zunächst als CFK-Sandwich-Konstruktion mit einem Aluminium-Wabenkern ausgeführt. Dagegen wurde bei der Folgeversion F-16C ein CFK-Höhenleitwerk mit einer V-Holm-Unterstruktur vorgesehen.

Es ist auch bekannt, Höhenleitwerke mit einer V-Holm-Unterstruktur für die Aufnahme der Beplankung zu versehen. Die Unterstruktur ist bei den bekannten Ausbildungen ein integrales, plastisch verformtes Metallblech, auf dem Beplankungen befestigt werden.

Verfahren nach dem superplastischen Umformen fanden bei keiner dieser Konstruktionen Anwendung. Es wurde aber bereits vorgeschlagen, eine derartige V-Holm-Unterstruktur aus Faserverbundwerkstoffen (mit Lang- oder Kurzfasern) herzustellen.

Nachteilig bei der Vielholm-Bauweise ist die aufwendige und kostenintensive Fertigung infolge der Vielzahl von Einzelteilen. Sandwich-Konstruktionen sind störanfällig und schlecht auf Schäden zu prüfen, sammeln häufig Waser im Kern an und sind schwierig zu reparieren.

Aufgabe der Erfindung ist es, eine Unterstruktur aus einem Stück zu schaffen, die sehr beulfest, leicht und kostensparend sowie mit guter Inspizierbarkeit hergestellt werden kann.

Zur Lösung der gestellten Aufgabe sind die kennzeichnenden Merkmale des Anspruchs 1 vorgesehen. Vorteilhafte Weiterbildungen ergeben sich aus den Unteransprüchen.

Ein Vorteil der Erfindung besteht insbesondere darin, dass durch Vernietung oder Verschraubung der Unterstruktur mit der Beplankung eine zuverlässige Verbindung dieser Bauteile gewährleistet wird. Die Herstellung der Unterstruktur aus einem Blech durch superplastische Umformung ist kostensparend, und in der Fertigung ist eine einfache und eindeutige Qualitätssicherung gewährleistet. Die so gefertigten Trag- und Leitwerke sind gut zu inspizieren, zu prüfen und relativ einfach zu reparieren. Wesentliche Massennachteile, z. B. gegenüber der Sandwichbauweise, sind nicht vorhanden.

Abstufungen in der Beplankung sind einfach vorzunehmen. Ein Ausgleich von geringen Toleranzen, die zwischen Unterstruktur und Beplankung entstehen können, ist durch Ausfüllen (Shimmen) mit einem Zwischenmaterial (z. B. Einlagen, Pasten u. a.) leicht vorzunehmen. Ferner ist das Volumen (Kammern) des Trag- oder Leitwerkes für eine Verlegung von Leitungen/Kabeln oder für die Unterbringung von Kraftstoff nutzbar. Eine Ansammlung von Wasser oder Feuchtigkeit im Inneren der Trag- oder Leitwerke, wie sie beispielsweise bei der Sandwichbauweise häufig vorkommt, kann durch Ablauf- und Belüftungslöcher ausgeschlossen werden. Die gesamte V- und wellenförmige Unterstruktur wird aus einem geeigneten hochfesten Metallblech durch die an sich bekannte superplastische Umformung hergestellt. Dabei wird das ebene Blech bei hoher Temperatur und unter Druck eines inerten Gases in eine Stahlform gedrückt. Die Stahlform enthält die V-förmige Anordnung sowie die Wellung der Stege und berücksichtigt die erforderlichen Beplankungsdicken. Die somit gewonnene integrale Unterstruktur wird anschliessend an beiden Seiten durch Vernietung oder Verschraubung mit den Beplankungen (z. B. aus CFK) zu einem tragenden Bauteil zusammengefügt; z. B. mit Vorder- und Hinterholm zum Seitenleitwerk-Hauptkasten.

Ein Ausführungsbeispiel ist folgend beschrieben und durch Skizzen erläutert.

Es zeigen :

Figur 1 eine V-Holm-Unterstruktur im Prinzip (Ausschnitt),

Figur 2 einen Ausschnitt-Kasten aus einem Seitenleitwerk gemäß Figur 5,

Figur 3 eine fertig bearbeitete V-Holm-Unterstruktur gemäß Figur 1,

Figur 4 einen fertigen Seitenleitwerk-Ausschnittkasten gemäß Figur 2,

Figur 5 ein Seitenleitwerk mit V-Holm-Unterstruktur.

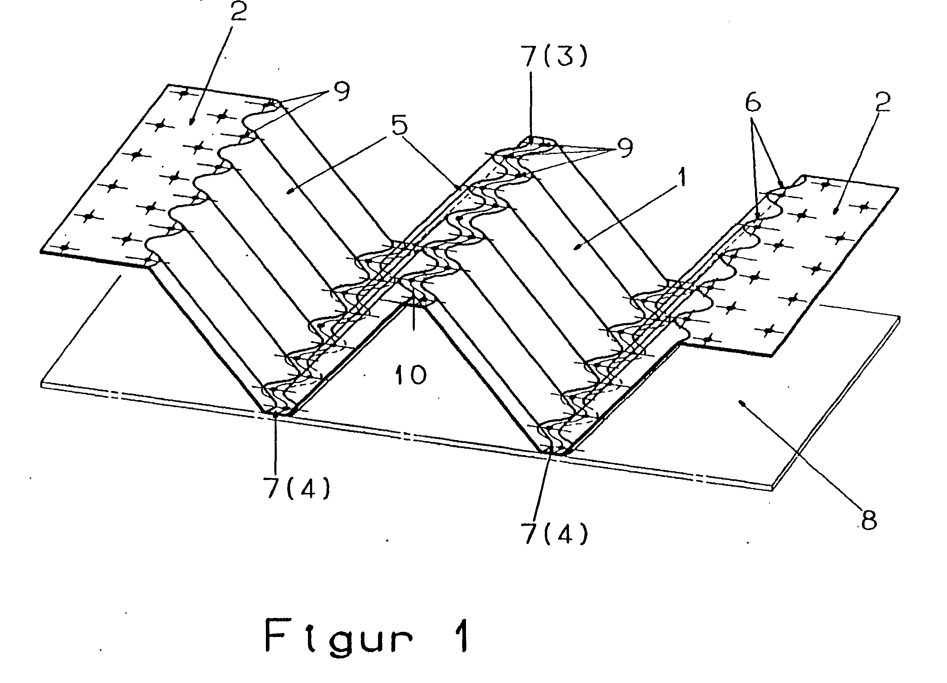

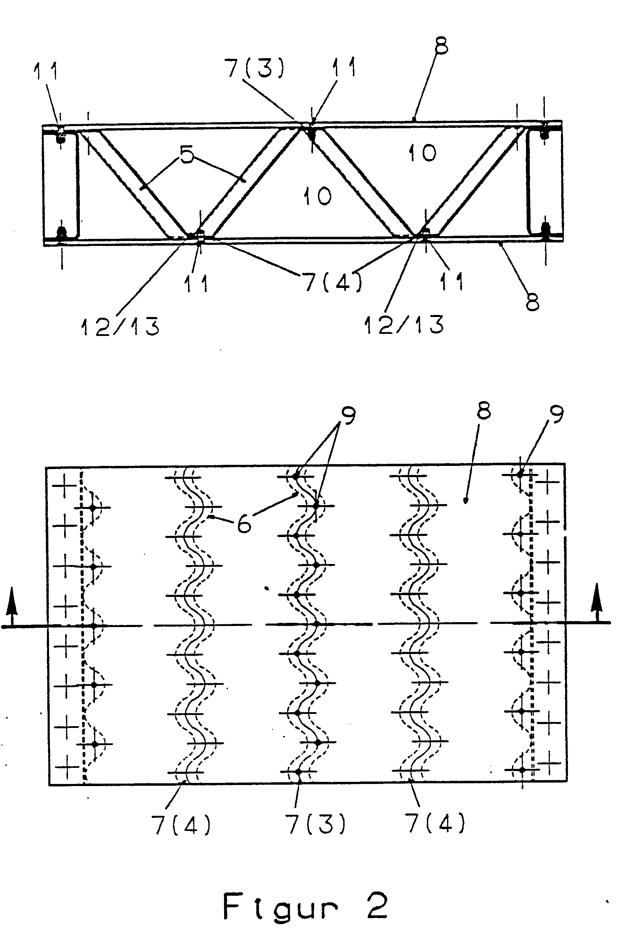

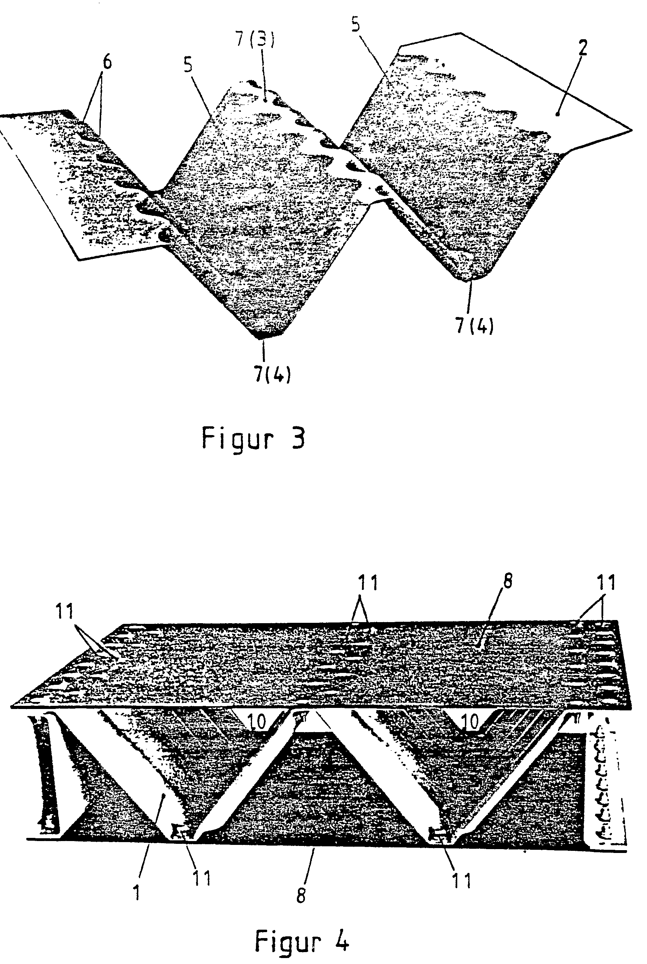

Aus Figur 1 ist der prinzipielle Aufbau und die Form einer aus einem hochfesten Aluminium-Blech V- und wellenförmig verformten integralen Unterstruktur 1 (auch Figuren 3 und 4) ersichtlich. Bei einem in einer Stahlform (in der Figur nicht gezeigt) so verformten Blech 2, weisen die von flanschartig ausgebildeten Erhebungen 3 zu ebenso ausgebildeten Vertiefungen 4 verlaufenden gewellten Schubstege 5 eine V-Form auf und bilden so durch Fortsetzung in Tiefenrichtung die sogenannte V-Holm-Unterstruktur. Die Erhebungen 3 und Vertiefungen 4 weisen, entsprechend der Wellung 6, ebene und zueinander parallele Flächen als Anschlußflansch 7 für die Befestigung der Beplankungen 8 (Figuren 2 und 4) auf, welche mit Bohrungen 9 versehen sind. Die V- und wellenförmig verlaufenden Schubstege 5 übernehmen dabei auf der gesamten Spannweite eines Tragoder Leitwerkes sowohl die Holmfunktion als auch die Funktion einer durchlaufenden « Fachwerkrippe », wodurch eine gute Aussteifung des Holmkastens erzielt wird. Es erübrigen sich damit quer zur Hauptbeanspruchungsrichtung liegende Nietreihen oder entsprechende Verstärkungen an den Beplankungen. Die von den Schubstegen 5 gebildeten Kammern 10 (Figuren 2 und 4) lassen sich von den Stirnseiten eines Hauptkastens her relativ gut inspizieren. Gegen Beulen müssen die relativ dünnen Schubstege 5 versteift werden, was durch die Wellung 6 des Bleches 2 erzielt wird. Derartig gewellte Schubstege 5 sind aus dem Flugzeug- und Leichtbau an sich bekannt. Problematisch war hierbei jedoch der Übergang der gewellten Schubstege zum Anschlußflansch. Durch die erfindungsgemässe Unterstruktur und ihrer Formgebung durch superplastische Umformung nur eines Bleches ergeben sich nunmehr neue und wesentlich bessere konstruktive Möglichkeiten.

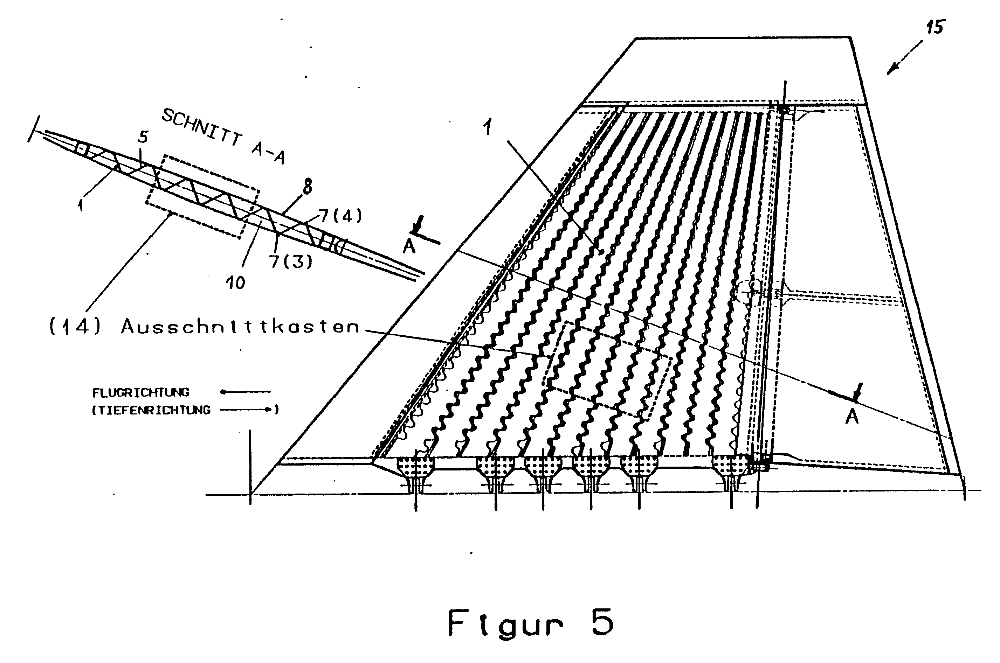

Aus Figur 2 ist ein Ausschnitt-Kasten 12 für ein Seitenleitwerk (Figur 5) als Musterbox in seitlicher und in der Ansicht von oben ersichtlich. Die integrale Unterstruktur 1 (Figuren 1, 3 und 4) ist hier zu beiden Seiten mit Beplankungen 8 versehen, welche mit den in den Erhebungen 3 und Vertiefungen 4 von den Schubstegen 5 gebildeten Anschlußflanschen 7 vernietet oder verschraubt sind 11. Die von den Schubstegen 5 und den Beplankungen 8 gebildeten Kammern 10 zeigt die seitliche Ansicht oben.

Die Anschlußflansche 7 der Unterstruktur 1 sind mit Verstärkungen 12 versehen, um örtlich die Festigkeit für Vernietung oder Verschraubung 11 zu erhöhen. Diese Verstärkungen 12 können entweder dadurch erzeugt oder hergestellt werden, dass die Gesamtfläche der Unterstruktur mit Ausnahme der Bereiche der Anschlußflansche chemisch abgetragen wird, oder dass die Anschlußflansche 7 mit streifenartigen Ein- oder Auflagen 13 durch Hartlöten oder Diffusionsschweißen verbunden werden.

In Figur 3 ist eine fertig bearbeitete integrale Unterstruktur 1 (Figuren 1, 2 und 4) dargestellt, woraus die Schubstege 5 mit Wellung 6, die Erhebungen 3 und Vertiefungen 4, sowie die dort von diesen gebildeten Anschlußflansche 7 ersichtlich sind.

Schliesslich ist, wie in Figur 2 beschrieben, aus Figur 4 ein fertig montierter Seitenleitwerk-Ausschnittkasten 14 ersichtlich. Aus der seitlich und schräg von oben gezeigten Ansicht sind die von der Beplankung 8 und der integralen Unterstruktur 1 und deren Vernietung oder Verschraubung 11 gebildeten Kammern 10 gut zu erkennen. Das die Unterstruktur 1 bildende Metallblech 2 kann im Kammerbereich mit Durchbrüchen versehen sein, um einzelne Kammern 10 miteinander zu verbinden (Kraftstoff).

Die Figur 5 zeigt den Entwurf eines Seitenleitwerkes 15 mit einer V-Holm-Unterstruktur 1, bei welcher die Holmstege 5 in Spannweitenrichtung orientiert sind.

Die auf diese Weise hergestellten Trag- und Leitwerke sind im Innern dieser Kammern 10 (in der Figur links) einfach auf Schäden zu inspizieren und es können eventuell notwendige Reparaturen unkompliziert vorgenommen werden. Bei der Fertigung kann ein Ausgleich der Toleranzen zwischen der integralen Unterstruktur 1 und den Beplankungen 8 an den Anschlußflanschen 7 (Figuren 3 und 4) durch Ausfüllen (Shimmen) mit Einlagen oder einer nach Einbringen sich verhärtenden Paste vorgenommen werden.

**Patentansprüche**

1. Tragendes Bauteil für Trag- und Leitwerke von Flugzeugen, enthaltend eine aus V-förmig zueinander verlaufenden Holmstegen gebildete Unterstruktur (1), die aus einem integralen, plastisch verformten Metallblech (2) für die Befestigung der Beplankung des Bauteiles besteht, dadurch gekennzeichnet, dass

das die Unterstruktur (1) bildende, integrale Blechbauteil superplastisch verformt ist und dass

das die Unterstruktur bildende Metallblech (2) beliebig viele V-förmig zueinander verlaufende Holmstege (5) bildet, die zugleich in ihrer Tiefe wellenförmig verlaufen.

2. Bauteil nach Anspruch 1, dadurch gekennzeichnet, dass das Metallblech (2) an den V-förmig zueinander verlaufenden Holmstegen (5) zueinander parallele Auflage- und Verbindungsflächen aufweist.

3. Bauteil nach Anspruch 2, dadurch gekennzeichnet, dass die Auflage- und Verbindungsflächen als Anschlussflansche (7) ausgebildet sind.

4. Bauteil nach Anspruch 3, dadurch gekennzeichnet, dass die Anschlussflansche (7) die zueinander verlaufenden Holmstege (5) integral miteinander verbinden.

5. Bauteil nach mindestens einem der Ansprüche 3 und 4, dadurch gekennzeichnet, dass die Beplankungen (8) auf die Anschlussflansche (7) genietet oder geschraubt sind.

6. Bauteil nach mindestens einem der Ansprüche 3 bis 5, dadurch gekennzeichnet, dass Dickenänderungen der Beplankungen (8) durch entsprechende Abstufungen in den Anschlussflanschen (7) berücksichtigt sind.

7. Bauteil nach mindestens einem der Ansprüche 3 bis 6, dadurch gekennzeichnet, dass die Anschlussflansche (7) mit Verstärkungen (12) versehen sind.

8. Bauteil nach Anspruch 7, dadurch gekennzeichnet, dass die Verstärkungen (12) durch chemisches Abtragen der Holmstege (5) erzeugt sind.

9. Bauteil nach mindestens einem der Ansprüche 7 und 8, dadurch gekennzeichnet, dass die Verstärkungen (12) streifenförmige Ein- oder Auflagen (13) sind und mit den Anschlussflanschen (7) durch Hartlöten miteinander verbunden sind.

10. Bauteil nach Anspruch 9, dadurch gekennzeichnet, dass die Ein- oder Auflagen (13) mit den Anschlussflanschen (7) durch Diffusionsschweissen miteinander verbunden sind.

11. Bauteil nach mindestens einem der vorangehenden Ansprüche, dadurch gekennzeichnet, dass das Metallblech (2) zur Verbindung einzelner durch seine V-förmige Ausgestaltung gebildeten Kammern (10) mit Durchbrüchen (15) versehen ist.

12. Bauteil nach mindestens einem der vorangehenden Ansprüche, dadurch gekennzeichnet, dass die Beplankungen (8) aus einem Metall- oder Faserverbundwerkstoff bestehen.

13. Bauteil nach mindestens einem der vorangehenden Ansprüche, dadurch gekennzeichnet, dass das Metallblech (2) mit den Beplankungen (8) durch Kleben, Hartlöten oder Diffusionsschweissen verbunden ist.

## Claims

1. Supporting member for aircraft wing and tail units, having a substructure (1) which is formed from spar webs extending towards each other in the shape of a V, and which comprises an integral, plastically deformed metal sheet (2) for fixing the skin of the member, characterised in that

the integral sheet member forming the substructure (1) is deformed superplastically, and in that

the metal sheet (2) forming the substructure forms any desired number of spar webs (5) extending towards each other in the shape of a V, which webs at the same time extend in a corrugated form in their depth.

2. Member according to claim 1, characterised in that the metal sheet (2) has support and joining surfaces parallel to each other on the spar webs (5) extending towards each other in the shape of V.

3. Member according to claim 2, characterised in that the support and joining surfaces are formed as connecting flanges (7).

4. Member according to claim 3, characterised in that the connecting flanges join integrally together the spar webs (5) which extend towards each other.

5. Member according to at least one of the claims 3 and 4, characterised in that the skin (8) is riveted or screwed on to the connecting flanges (7).

6. Member according to at least one of the claims 3 to 5, characterised in that changes in thickness of the skin (8) are allowed for by means of corresponding variations in the connecting flanges (7).

7. Member according to at least one of the claims 3 to 6, characterised in that the connecting flanges (7) are provided with reinforcements (12).

8. Member according to claim 7, characterised in that the reinforcements (12) are produced by chemical erosion of the spar webs (5).

9. Member according to at least one of the claims 7 and 8, characterised in that the reinforcements (12) are lamellar inserts or supports (13) and are joined to the connecting flanges (7) by means of hard soldering to each other.

10. Member according to claim 9, characterised in that the inserts or supports (13) are joined to the connecting flanges (7) by means of diffusion welding.

11. Member according to at least one of the preceding claims, characterised in that the metal sheet (2) is provided with perforations (15) for the connection of individual chambers (10) formed by its V-shaped design.

12. Member according to at least one of the preceding claims, characterised in that the skin (8) consists of a metal or fibre composite material.

13. Member according to at least one of the preceding claims, characterised in that the metal sheet (2) is joined to the skin (8) by adhesive, hard soldering or diffusion welding.

## Revendications

1. Structure porteuse pour voilures et empennages d'avions comprenant une sous-structure (1) constituée d'entretoises de longeron disposées en V, laquelle se compose d'une tôle métallique (2) intégrale à déformation plastique pour la fixation de l'enveloppe de la structure, caractérisée en ce que

la structure de tôle intégrale constituant la sous-structure (1) est déformée de manière superplastique et que

la tôle métallique (2) constituant la sous-structure forme un nombre quelconque d'entretoises de longeron (5) disposées en V qui présentent en même temps une extension ondulée dans le sens de leur profondeur.

2. Structure selon la revendication 1, caractérisée en ce que la tôle métallique (2) comporte sur les entretoises de longeron (5) disposées en V des surfaces d'appui et d'assemblage parallèles.

3. Structure selon la revendication 2, caractérisée en ce que les surfaces d'appui et d'assemblage sont conformées en brides de raccordement (7).

4. Structure selon la revendication 3, caractérisée en ce que les brides de raccordement (7) assurent une liaison intégrale des entretoises de longeron (5) disposées en V.

5. Structure selon au moins l'une des revendications 3 et 4, caractérisée en ce que les enveloppes (8) sont rivetées ou vissées sur les brides de raccordement (7).

6. Structure selon au moins l'une des revendications 3 à 5, caractérisée en ce que des variations de l'épaisseur des enveloppes (8) sont prises en considération par des échelonnements correspondants dans les brides de raccordement (7).

7. Structure selon au moins l'une des revendications 3 à 6, caractérisée en ce que les brides de raccordement (7) sont munies de renforts (12).

8. Structure selon la revendication 7, caractérisée en ce que les renforts (12) sont réalisés par attaque chimique des entretoises de longeron (5).

9. Structure selon au moins l'une des revendications 7 et 8, caractérisée en ce que les renforts (12) sont constitués par des garnitures ou revêtements (13) en forme de bandes et reliés aux brides de raccordement (7) par brasage.

10. Structure selon la revendication 9, caractérisée en ce que les garnitures ou revêtements (13) sont reliés aux brides de raccordement (7) par soudage par diffusion.

11. Structure selon au moins l'une des précédentes revendications, caractérisée en ce que la tôle métallique (2) est munie d'ajours (15) pour l'assemblage de différentes chambres (10) constituées par sa conformation en V.

12. Structure selon au moins l'une des précédentes revendications, caractérisée en ce que les enveloppes (8) sont réalisés à partir d'un matériau métallique ou composite renforcé par des fibres.

13. Structure selon au moins l'une des précédentes revendications, caractérisée en ce que la tôle métallique (2) est reliée aux enveloppes (8) par collage, brasage ou soudage par diffusion.

Figur 1

Figur 2

Figur 3

Figur 4

SCHNITT A-A

5

1

8

7(4)

7(3)

10

(14) Ausschnittkasten

FLUGRICHTUNG

(TIEFENRICHTUNG ——→)

1

15

A

A

Figur 5

EP 0 199 914 B1